(19) Europäisches Patentamt
European Patent Office
Office européen des brevets

(11) EP 2 669 661 A1

(12) EUROPEAN PATENT APPLICATION

(43) Date of publication:
04.12.2013 Bulletin 2013/49

(51) Int Cl.:
*G01N 21/41* (2006.01) *G01N 21/45* (2006.01)

(21) Application number: 12191355.2

(22) Date of filing: 06.11.2012

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(71) Applicant: Siemens Aktiengesellschaft
80333 München (DE)

(72) Inventor: Khodyachykh, Sergiy
91058 Erlangen (DE)

# (54) Method and device to determine the volume ratio of at least two components in a mixture

(57) A method and a device (30, 31, 33) are provided to determine in a mixture of at least two components having an individual refraction index each, the volume ratio of the components, whereby a laser beam (17) with a wavelength where the mixture is translucent is propagating through the mixture, whereby in the mixture the propagation velocity of the laser beam (17) is affected by the individual refraction indices, whereby a resulting phase shift of the laser beam (17) after its propagation through the mixture is observed and whereby the volume ratio of the components is calculated from the observed phase shift.

FIG 2

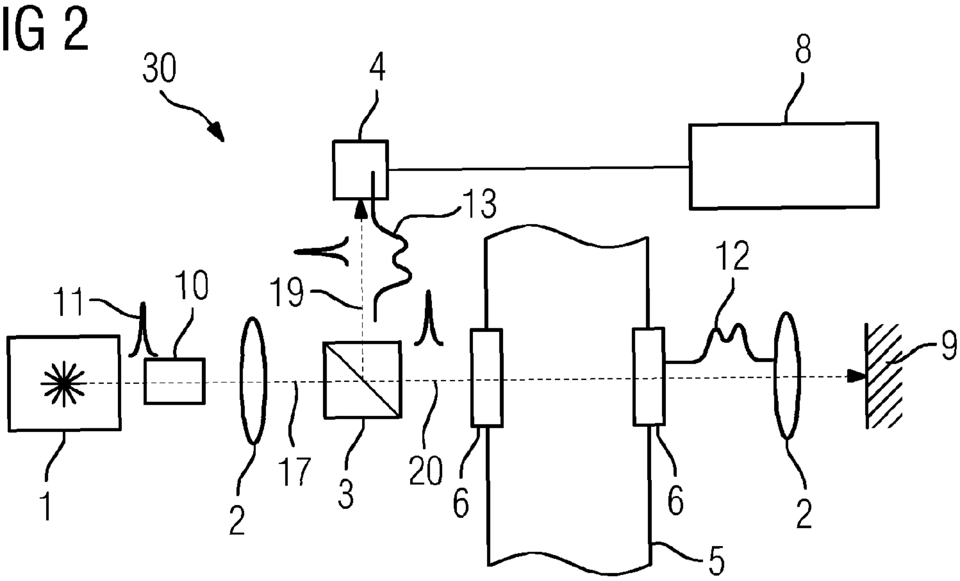




Printed by Jouve, 75001 PARIS (FR)

## Description

The invention relates to a method to determine in a mixture of at least two components the volume ratio of the components. The invention also relates to a device for the determination of the volume ratio of at least two components in a mixture. In particular, the invention relates to a method and to a device to determine the mass ratio of two components in a mixture. The invention specifically deals with the problem to determine the mass and/or volume ratio of at least two components in a mixture, the at least two components representing at least two phases of the same substance, like water and steam, at least one phase of at least two substances, like a mixture of at least two gases or like a mixture of oil and water, or at least two phases of at least two substances like oil and gas.

The determination of the volume ratio or the mass ratio of at least two components in a two phase liquid-gas mixture is very important but is still a not fully resolved problem. For example, in steam supply systems of a power plant an instant knowledge of the void fraction (i. e. the volume content of a gaseous phase in a mixture) is crucial for proofing the required quality of steam supply systems, moisture separators or re-heaters in a steam turbine power plant. Also in oil or gas transport systems the knowledge of the gas fraction in the transported mixture is very important.

Generally, the vapor mass fraction $x_{st}$ in a two phase liquid-gas mixture (in case of water often referred to as "steam quality") is defined as:

$$X_{st} = \frac{m_V}{m_V + m_L},$$

where $m_V$ and $m_L$ are the mass of vapor and the mass of liquid respectively. In the last 40 years mainly chemical methods where applied for its determination. However, due to the complexity of the needed analyzing procedures these methods can be used only during commissioning.

From Ch. Mitra et al., Development of Steam Quality Measurement and Monitoring Technique Using Absorption Spectroscopy with Diode Lasers. IEEE Sensors Journal, V. 11, No. 5, 2011, p. 1214-1219, it is known to use the difference in the absorption spectra of the liquid and gas fractions of the same substance to determine their volume and/or mass ratio. In US 4,862,001 A it is proposed to use a broad band infrared source for the determination of the vapor mass fraction. The development of compact semiconductor laser sources enabled optical extinction methods for the determination of the vapor mass fraction based on the absorption of light from two or from three single narrow-band lasers with different wavelength, which is disclosed in US 7,345,280 A, US 7,381,954 A and US 7,034,302 A respectively.

All this known methods however, are based on the assumption that the scattering of light does not contribute to the change of the intensity of the propagating light beam or that the scattering contribution is equal for all wavelengths and, thus can be eliminated. But considering a two-phase gas-liquid mixture as a suspension of dielectric spheres (droplets of liquid) in a uniform medium (gaseous phase), one can conclude, that the effect of optical scattering depends on the optical wavelength and on the unknown size distribution of the droplets. A wavelength dependent scattering of light by small sized particles is already known as "Mie-scattering" or "Rayleigh-scattering". The Mie- and the Rayleigh-scattering describe different processes related to different relevant particle sizes. However, the size distribution of droplets in a gaseous phase may change and depends in particular with regard to steam supply lines on the variation of the operational parameters of the steam generating system.

It is therefore a drawback of the already known optical absorption methods to determine the volume and/or mass fraction of at least two components in a mixture that they do not distinguish between the intensity attenuation caused by scattering and the intensity attenuation caused by absorption. These methods therefore lack a measurement quality as some residual errors are present in the obtained results.

It is therefore an object of this invention to provide for an optical method and for a device to determine the volume ratio of at least two components in a mixture, where the result obtained is not affected by a scattering of light in the mixture.

The first object is achieved with regard to the invention by a method to determine in a mixture of at least two components the volume ratio of the components, whereby a laser beam with a wavelength where the mixture is translucent is propagating through the mixture, whereby in the mixture the propagation velocity of the laser beam is affected by the individual refraction indices of the components, whereby the resulting phase shift of the laser beam after its propagation through the mixture is observed and whereby the volume ratio of the components is calculated from the observed phase shift.

The invention realizes that apart from the difference in the absorption spectra the at least two components of a mixture may differ also in other optical properties, especially in case that the at least two components relate to two phases of the same substance. One of them is the refraction index which due to physical reasons in many cases is different also for different phases of the same substance. In particular, the difference between the refraction indices of water and of steam varies by about 30 % over a wide range of temperatures as shown by P. Schiebener et al., Refractive Index of Water and Steam as Function of Wavelength, Temperature and Density, J. Phys. Chem. Ref. Data, Vol. 19, No 3, p. 677-717, 1990. Figure 1, where the refraction index of water and steam at a state of saturation is shown at a wavelength of 0.2265 μm, clearly discloses this dependence. The refraction index of liquid water has a value between 1.3 and 1.4. The refraction index of steam has a value around 1.0.

The invention then recognizes that light running through a mixture of at least two components will travel through at least a plurality of first volume cells and through at least a plurality of second volume cells containing the at least first and the at least second component respectively. Accordingly, the propagating light will be affected in the first volume cells by the first individual refraction index of the first component and will be affected in the second volume cells by the individual second refraction index of the second component. The total refraction index of the mixture as seen by the travelling light therefore can be regarded as the sum of the individual refraction indices weighted by its respective volume contribution. Given a realistic statistical distribution of the at least first and second volume cells in the measured volume, with the knowledge of the individual refraction indices of the at least two components in the mixture it is therefore possible to calculate from the measured total refraction index the volume ratio of the at least two components in the mixture.

Measuring therefore the total refraction index as seen by light propagating through the mixture does therefore allow determination of the volumetric fraction of each individual component, in particular their volume ratio. Independent measurements of state parameters like pressure and/or temperature provide for the information about the volumetric densities of each of the components. Thus, also the mass ratio of the two components of the mixture can be precisely calculated.

The invention is not restricted to any specific mixture of at least two components. The provided method as described above is useful for any mixture of at least two components, where the components do have individual refraction indices each. A mixture in this context does mean that the at least two components are not soluble in each other but separable and do have generally different chemical and/or physical properties. The at least two components may be solid state particles, liquid droplets or gas bubbles. In particular, the at least two components are forming a dispersion. Also a suspension, an aerosol, an aerogel, a foam or a sponge may be regarded as the mixture. In particular, the mixture comprises at least two non soluble liquids like oil and water, at least two different phases, like one solid and one liquid phase or one liquid and one gaseous phase, or at least two kinds of solid particles.

Given a total refraction index of the mixture, light travels with a total (averaged) light speed through the mixture. Accordingly, the total refraction index is measurable in a specific phase shift of the light after its propagation through the mixture. The phase shift of light after its propagation through the mixture is measured with a laser beam at a wavelength where the mixture is translucent.

In a preferred embodiment of the invention the volume ratio of at least one liquid and at least one gaseous component is determined, in particular whereby the at least one liquid and the at least one gaseous components are representing a liquid phase and a gaseous phase of the same substance respectively. One example is a gas phase saturated with water, where liquid droplets are formed. The first component of this mixture is liquid water. The second component is steam.

As the refraction indices of steam and water differ over a wide range of temperatures (see Fig. 1), the provided method hence is very useful to measure the steam quality in steam supply systems of power plants.

According to yet another embodiment of the invention a laser beam comprising a plurality of laser pulses is split into a first laser beam and into a second laser beam, whereby the first laser beam is detected with a first detector, whereby the second laser beam propagates through the mixture and is then detected with a second detector, and whereby the phase shift of the second laser beam is observed by comparing the signals of the first and second detectors.

Preferably, laser pulses having a typical pulse length of several picoseconds or below are used to obtain the phase shift of the second laser beam travelling through the mixture. Using short or ultra short laser pulses allow an increase in the time resolution of the measurement results. As laser sources for short or ultra short laser pulses compact and stable solid state pulse lasers are commercially available.

Preferably, the phase shift of the second laser beam is observed as a difference between the arrival times of the laser pulses of the first and the second laser beams at the detectors. Given a measuring cell diameter of d = 250 cm, the refraction index of steam $n_S$ = 1.000003, the refraction index of water $n_W$ = 1.3 and the vacuum speed of light c = 3 x $10^{10}$ cm/s, the delay times of light propagating through the cell of $\Delta t_s$ = 8.33 ns for pure steam and $\Delta t_w$ = 10.83 ns for pure water in the measuring cell are calculable. Any control unit or data acquisition system which is able to distinguish between these time delays is therefore be able to detect the volume ratio of water and steam in a saturated mixture. As possible detectors high speed photo diode detectors could be used. With semiconductor PIN detectors operating frequencies up to 5 GHz are available, having rise times down to 0.3 ns. Alternatively, opto-electrical converters could be used as detectors. High speed opto-electrical converters operate with frequencies up to 14 GHz at an optical wavelength range from 900 nm to 1700 nm.

In addition or alternatively the phase shift of the second laser beam is observed in a difference of the shapes of the laser pulses of the first and the second beams. The invention thereby realizes that a laser pulse short in its time domain generally is spectrally broad and is therefore comprised of a plurality of different wavelengths. As the refraction index of a given substance generally depends from the wavelength, a short laser pulse travelling through a substance will change its shape as different wavelengths are travelling with different speeds. It is therefore possible to observe the total refraction index of a given mixture by analyzing the change of shape of a laser pulse after its propagation through the mixture. For obtaining the shape of the laser pulse before and after its propagation through the given mixture an optical gating, an auto-correlation technique or a streak-camera may be used. An optical gating for example uses the phenomena of non linear optics, in particular, a second harmonic generation, to provide a detectable signal only in case of two copies of the laser pulse are present at the same time. By varying the delay between the pulse copies and measuring the signal at each delay gives information about the respective pulse shape. The principle of optical-gating is often also used in the so-called auto-correlation techniques to provide a background free auto-correlation signal of two pulse copies. Also an interference or a cross-correlation technique may be used to determine information about a change in the shape of the laser beam by travelling through the mixture. A streak-camera transforms information in time into spatial information. Particularly, an incoming laser pulse with the aid of a photomultiplier is transformed into an electron beam which travels through a timely varying electrical field. Early and late arriving electrons therefore would be deflected differently.

According to another preferred embodiment of the invention the second laser beam is propagating twice through the mixture, whereby only one single detector combining the first and the second detector is used for detecting the first as well as the second laser beams. Having the second laser beam propagating twice through the mixture its time delay or phase shift respectively would be doubled and is therefore measurable with better resolution. On the other side, having the pulses of the first and the second laser beams detected with one detector only allows the use of interference methods to observe the given phase shift.

Additionally or alternatively the intensity of the laser beam preferably is modulated by an AC signal with a lower frequency compared to the frequency of the laser beam, whereby the phase shift of the second laser beam is observed as a phase shift of the modulated laser beam signal. According to this method a continuous wave laser source is used. Modulating the laser beam with a lower frequency as compared to the laser beam itself allows measuring the phase shift of the laser beam after having passed the mixture as a phase shift of the modulated signal. Available electronic detectors like the above described high speed photo diode detectors or high speed electro-optical converters are able to resolve the received optical signals with a modulation up to 14 GHz.

A today commercially available measuring device for a phase shift between two signals with a high resolution in time is a so called network analyzer. With the help of such a device one can generate RF-signals and analyze them after passing through any system/network. Presently, network analyzers operating at frequencies up to 20 GHz are available on the market. The accuracy of the phase determination by such devices depends on the operation frequency and is typically in the range of a few 1/100 of a degree. In W. H. Hwang et al., Phase Measurement and Compensation Cystem in OLS 2.5 GeV Linac for PAL-FEL (TUPCH136), Proceedings of EPAC 2006, Edinburgh, Scotland, 2006, p. 1337 it was reported that with a network analyzer a phase accuracy of pulse to pulse measurements of 0.03° (rms) has been achieved at a frequency of 2.856 GHz.

Preferably, the laser beam is generated by a laser diode, which is intensity modulated by using the AC signal as a driving signal. A modern laser diode shows a prefect linearity of the output power (i.e. intensity) as a function of the injection current. Today, laser diodes are available on the market which allow for its laser beam a modulation frequency up to 5 GHz. Assuming a today demand of a high-speed (up to 100 Gbps) data transmission for laser diodes with a high modulation frequency it is expected that modulation frequencies of several tenth of GHz will be available soon.

Assuming for a given laser beam an intensity modulation with a frequency of 5 GHz, which is achievable with today state of the art laser diodes, at a given pressure of 70 bar and a given steam mass ratio of X = 0.998, over an optical path length of 1 m the change of the phase of the detected modulated laser beam which corresponds to a change in the steam mass ratio of $\Delta x = 10^{-3}$ will be equal to $\Delta\varphi = 0.076°$. This phase shift is clearly detectable with the above discussed modern technical devices. For the same conditions, but at a system pressure of 15.5 bar the phase shift of $\Delta\varphi = 0.07°$ corresponds to a resolution of $\Delta x = 4.4 \times 10^{-3}$. To reach the resolution of $\Delta x = 10^{-3}$ one has simply to increase the optical path length from 1 m to 4.4 m, or to increase the modulation frequency respectively.

The second object with regard to the invention is achieved by providing a device for the determination of the volume ratio of at least two components having an individual refraction index each in a mixture, the device comprising a laser beam source, a measuring cell containing the mixture, a number of optical elements for directing the laser beam of the laser source through the measuring cell, and at least one detector for detecting the laser beam after its propagation through the measurement cell, and a control unit for carrying out the method as described above.

In a preferred embodiment as laser source and/or as a detector of the device for the determination of the volume ratio of at least two components in a mixture the above presented technical means are used respectively. The device then will have the advantages as stated above for the described method.

In a preferred embodiment the measuring cell is given as a pipe having two optical windows to allow the laser beam propagating through a mixture flowing through the pipe. Particularly, the pipe is a steam pipe. Preferably, the optical windows are given as quartz windows. According to one useful embodiment the measuring cell is a part of a process pipe or is integrated in a given process pipe. This allows an on-site measurement of the volume ratio of the at least two components in the mixture, in particular the determination of the steam quality in steam supply systems of power plants.

The invention has as an additional advantage its ability for a serve-calibration. The first calibration of the measuring system has to be done on the manufactory side. It includes the definition of a phase offset with regard to a given cable length and (if there are any) mechanical tolerances influencing the optical path length through the air, i.e. outside of the measuring cell. Upon the installation of the device the first measurement has to be done within the measuring cell filled with air, or some other gas having a well-known refractive index at a given temperature and atmospheric pressure. From the then obtained phase shift the system defines a mechanical path length with the same high accuracy, which will be reached during the routine measurements. No additional high-precision mechanical measurements are needed. The system thus can be seen as serve-calibrated. The calculation of the volume ratio of the two components in the mixture from the phase delay will be done by the control unit using for example a stored look-up table.

These and various other features of the present invention will become better understood upon reading of the following description of the preferred embodiment in conjunction with the accompanying drawings.

Fig. 1 shows in a graphic the refraction indices of water and steam at a state of saturation at a wavelength of 0.2265 μm,

Fig. 2 shows a schematic layout of a first device for the determination of a volume ratio of at least two components in a mixture using a pulsed laser source,

Fig. 3 shows a schematic layout of a second device for the determination of a volume ratio of at least two components of a mixture using a pulsed laser source,

Fig. 4-6 show shapes of first and second laser pulses travelling through air and through the measured mixture respectively,

Fig. 7 shows the propagation of an intensity modulated continuous wave laser beam and

Fig. 8 shows a schematic layout of a third device for the determination of the volume ratio of at least two components in a mixture using a continuous wave laser source.

Fig. 1 shows the different refraction indices of steam and water and it has been already referred to in the above description.

Fig. 2 shows a schematic layout of a first device 30 for the determination of the volume ratio of at least two components having an individual refraction index each in a given mixture. A laser source 1 generates a laser beam 17 comprised of a plurality of short laser pulses 11. The laser pulses 11 are travelling through a collimator lense 2. The laser beam 17 then is split with a beam splitter 3 into a first laser beam 19 and into a second laser beam 20. The first laser beam 19 is used as a reference beam which is detected by the detector 4.

The second laser beam 20 propagates through a measuring cell 5, equipped with two optical windows 6, for example made from quartz glass, and is focused with another collimator lense 2 to a 100% reflective mirror 9. The measuring cell 5 is filled with the mixture, or the mixture is flowing through the measuring cell 5 respectively. The reflected second laser beam 20 then is travelling back again through the measuring cell 5 towards the beam splitter 3. At the beam splitter 3 the reflected second laser beam 20 and the reference laser beam 19 are combined and both are detected with the single detector 4.

To prevent an unwanted feedback to the optical resonator of the laser source 1, light from laser beams travelling back from the beam splitter 3 towards the laser source 1 is blocked by an optical isolator 10. The optical isolator 10 for example is a faraday rotator. The shapes of the laser pulses (see reference numerals 11, 12, 13) of the initial laser beam 17, of the first laser beam 19, of the second laser beam 20, of the second laser beam 20 once transmitted through the measuring cell 5, as well as of the second laser beam 20 transmitted through the measuring cell 5 - reflected from the mirror 9 - transmitted back through the measuring cell 5 and directed to the detector 13 are shown in Fig. 2.

A control unit 8 observes the phase shift of the second laser beam 20 with regard to the first laser beam 19 by a comparison of the signals detected with the single detector 4. An interference technique, an optical-gating or a cross-correlation technique could be used to obtain the phase shift. Also a streak-camera can be used as detector 4 to observe the time delay between the two laser beams 19, 20 or to obtain information about the different shapes of the laser pulses of the first and the second laser beams 19, 20. From the observed phase shift of the second laser beam 20 the control unit 8 calculates the volume ratio of the at least two components of the mixture in the measuring cell 5. For that calculation the known refraction indices of the given components are used. Additionally the state parameters temperature and pressure are considered.

Fig. 3 shows a schematic layout of a second device 31 for the determination of the volume ratio of at least two components having an individual refraction index each in a mixture. Instead of the mirror 9 of Fig. 2 a second detector 7 is placed on the opposite side of the laser beam line. As first and second detectors 4, 7 high speed photo diodes are used to obtain a difference in the arrival times of the laser pulses of the first and the second laser beams 19, 20 at the first and second detectors 4, 7. The control unit 8 analyzes the difference in the arrival times and uses the determined time delay for calculating a phase shift of the second laser beam 20 obtained by its propagation through the measuring cell 5.

From the obtained phase shift again a total refraction index of the measured mixture is calculated and from the obtained refraction index the volume ratio of the at least two components in the measured mixture are determined.

Fig. 4 to 6 show pulse shapes of the laser pulses 11, 12, 13, 14 of the referenced first laser beam 19 and of the second laser beam 20 respectively.

According to Fig. 4 it is assumed that the pulse shape is not changed during the propagation of the second laser beam 20 through the measuring cell 5. The laser pulse 14 only becomes broader and its intensity decreases through propagation. By analyzing the shown time delay 15 a given phase shift could be easily obtained.

The shape of the laser pulse 12 of the second laser beam 20 according to Fig. 5 shows a realistic change due to dispersion in the measured mixture. Analyzing characteristic time delays 16 will bring additional information for the determination of the total refraction index and the determination of the volume ratio of the at least two components in the measured mixture.

In Fig. 6 the shape of the laser pulse 13 of the second laser beam 20 after having travelled twice through the mixture according to Fig. 2 is shown. The pulse shape of the laser pulse 13 is more broadened as compared to the pulse shape of the laser pulse 12. The measured time delay between the laser pulse 11 of the first laser beam 19 and the laser pulse 13 of the second laser beam 20 has been increased.

Fig. 7 explains an alternative method for the determination of the volume ratio of at least two components having an individual refraction index each in a mixture by using a modulated continuous wave laser beam 17. The amplitude (or the intensity respectively) of an optical wave is modulated with a harmonic AC-signal of a lower frequency. The modulated signal 18 is shown. Starting on the left hand side, the laser beam 17 or the wave respectively propagates through three different regions to the right. If all three regions have the same refraction index no the wavelength of the laser beam 17 does not change and the laser beam reaches a detector at the right side with some phase (a). In an optical denser medium ($n_1$ > no, (b)) the wave oscillates with the same frequency, but travels with a smaller velocity. Accordingly, the wavelength of the laser beam 17 within the denser medium having an individual refraction index of $n_1$ > no is shorter than in the other regions (b). As a consequence, a detector at the right end of the optical path will measure a changed phase. If the refraction index of the medium in the middle region changes now from $n_1$ to $n_2$ a detector at the right end of the optical path will detect a change in phase of the modulated signal again (c).

Fig. 8 shows a schematic view of a third device 33 for the determination of the volume ratio of at least two components in a mixture, where a laser diode is used as the lased source 1. The laser diode emits a continuous wave laser beam 17. The laser beam 17 propagates through a measuring cell 5 and is detected with a high speed photo diode 4.

The control unit 8 generates a highly stable (AC) RF signal 21 which is sent as driving signal to the laser diode (laser source 1). Accordingly, the laser beam 17 is modulated in its intensity as it is shown in fig. 7.

For observing a phase shift of the laser beam 17 by propagating through the mixture in the measuring cell 5, the control unit 8 compares the phase of the RF-signal 21 with the phase of the laser beam 17 detected with the detector 4. For the detection of the difference in the phases of the RF-signal 21 and the detected signal of the laser beam 17, the control unit 8 comprises a network analyzer or any other electronic circuit which allows the detection of phases up to 0.03°. The modulation frequency is chosen with several GHz to several tens of GHz, for example 5 GHz. After calibrating the device 33 with regard to the relation between the RF-signal 21 and the obtained laser beam signal 17, any phase shift through a change of the refraction index in a mixture could be easily obtainable.

## Claims

1. A method to determine in a mixture of at least two components having an individual refraction index each, the volume ratio of the components, whereby a laser beam (17) with a wavelength where the mixture is translucent is propagating through the mixture, whereby in the mixture the propagation velocity of the laser beam is affected by the individual refraction indices, whereby a resulting phase shift of the laser beam after its propagation through the mixture is observed and whereby the volume ratio of the components is calculated from the observed phase shift.

2. Method according to claim 1,
whereby the volume ratio of at least one liquid and at least one gaseous component is determined, in particular whereby the at least one liquid and the at least one gaseous component are representing a liquid phase and a gaseous phase of the same substance respectively.

3. Method according to claim 2,
whereby said substance is water, whereby the at least one liquid phase is liquid water and whereby the at least one gaseous phase is steam.

**4.** Method according to any of the preceding claims, whereby an average refraction index of the mixture is calculated from the observed phase shift and whereby the volume ratio of the components is calculated from the average refraction index based on the known individual refraction indices of the components.

**5.** Method according to any of the preceding claims, whereby the mass ratio of the components is calculated from the volume ratio using the given density of the components.

**6.** Method according to any of the preceding claims, whereby a laser beam (17) comprising a plurality of laser pulses (11, 12, 13, 14) is split into a first laser beam (19) and into a second laser beam (20), whereby the first laser beam (19) is detected with a first detector (4), whereby the second laser beam (20) propagates through the mixture and is then detected with a second detector (7), and whereby the phase shift of the second laser beam (20) is observed by comparing the signals of the first and second detectors (4, 7).

**7.** Method according to claim 6,
whereby the phase shift of the second laser beam (20) is observed as a difference between the arrival times of the laser pulses (11, 12, 13, 14) of the first and the second laser beams (19, 20) at the detectors (4, 7).

**8.** Method according to claim 6 or 7,
whereby the phase shift of the second laser beam (20) is observed in a difference of the shapes of the laser pulses (11, 12, 13, 14) of the first and the second beams (19, 20).

**9.** Method according to any of the claims 6 to 8, whereby the second laser beam (20) is propagating twice through the mixture and whereby one single detector (4) combining the first and the second detectors (4, 7) is used for detecting the first and the second laser beams (19, 20).

**10.** Method according to any of the claims 6 to 9, whereby the first and the second signals are compared by using an interference technique, an cross correlation technique, an autocorrelation technique, a streak-camera, an optical gating and/or an electronical time delay analyzer.

**11.** Method according to any of the preceding claims, whereby the intensity of the laser beam is modulated by an AC signal (21) having a lower frequency compared to the frequency of the laser beam (17), and whereby the phase shift of the second laser beam (20) is observed as a phase shift of the modulated laser beam signal (18).

**12.** Method according to claim 11,
whereby the phase shift of the modulated signal (18) is observed as a difference between the phases of the AC signal (21) and the detected modulated laser beam signal (18).

**13.** Method according to claim 11 or 12,
whereby the laser beam (17) is generated by a laser diode, which is intensity modulated by using the AC signal (21) as a driving signal.

**14.** A device (30, 31, 33) for the determination of the volume ratio of at least two components having an individual refraction index each in a mixture, comprising a laser beam source (1), a measuring cell (5) containing the mixture, a number of optical elements (2, 3, 6) for directing the laser beam (17) of the laser source (1) through the measuring cell (5), at least one detector (4, 7) for detecting the laser beam (20) after its propagation through the measurement cell (5), and a control unit (8) for carrying out the method as claimed in any of the preceding claims.

**15.** The device of claim 14,
whereby the measuring cell 5 is a part of a process pipe or is integrated in a process pipe.

FIG 1

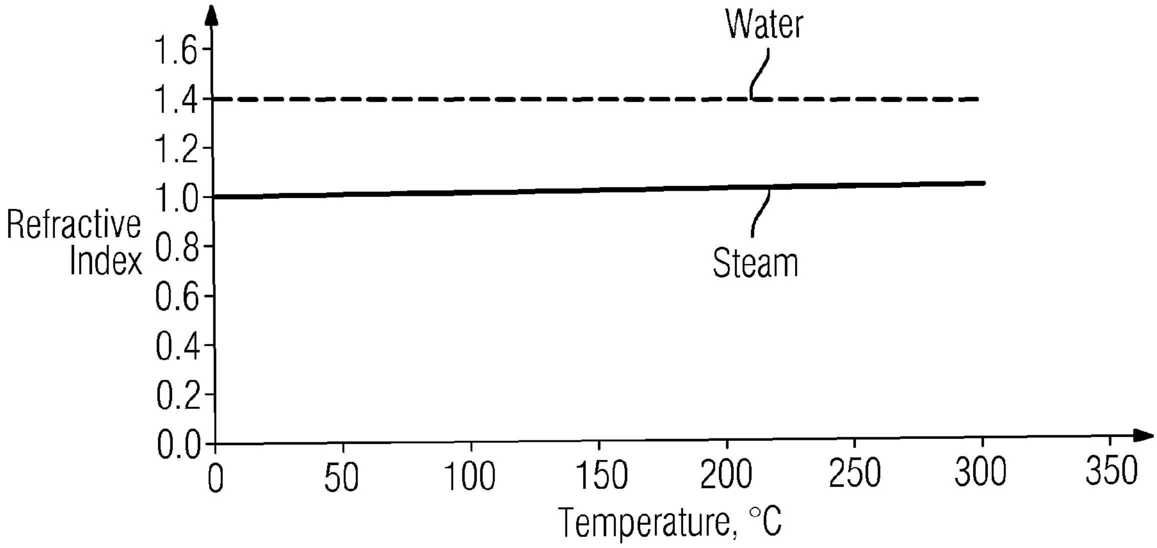
Water
Steam
Refractive Index
1.6
1.4
1.2
1.0
0.8
0.6
0.4
0.2
0.0
0
50
100
150
200
250
300
350
Temperature, °C

FIG 2

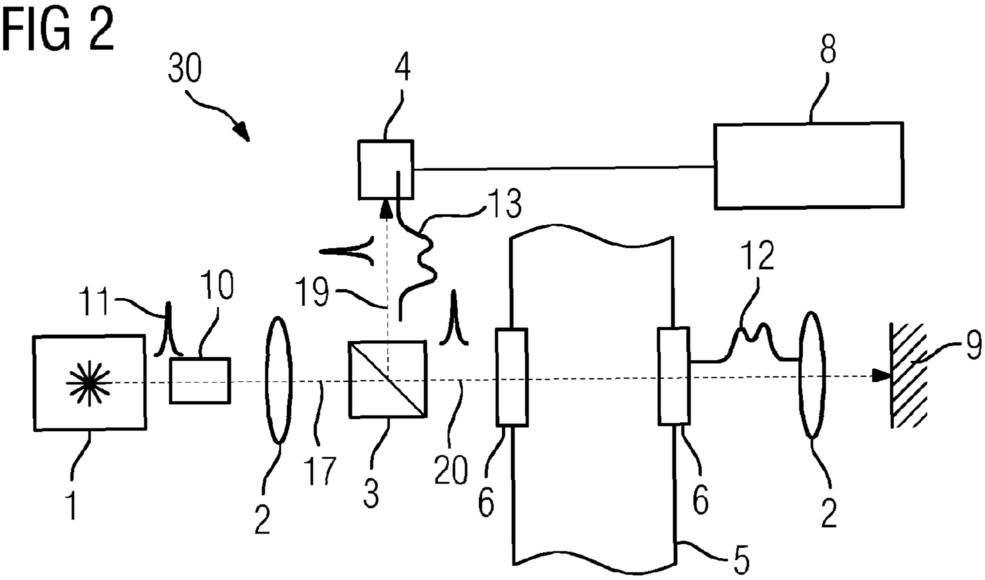
30
4
8
13
12
11
10
19
9
1
2
17
3
20
6
6
2
5

FIG 3

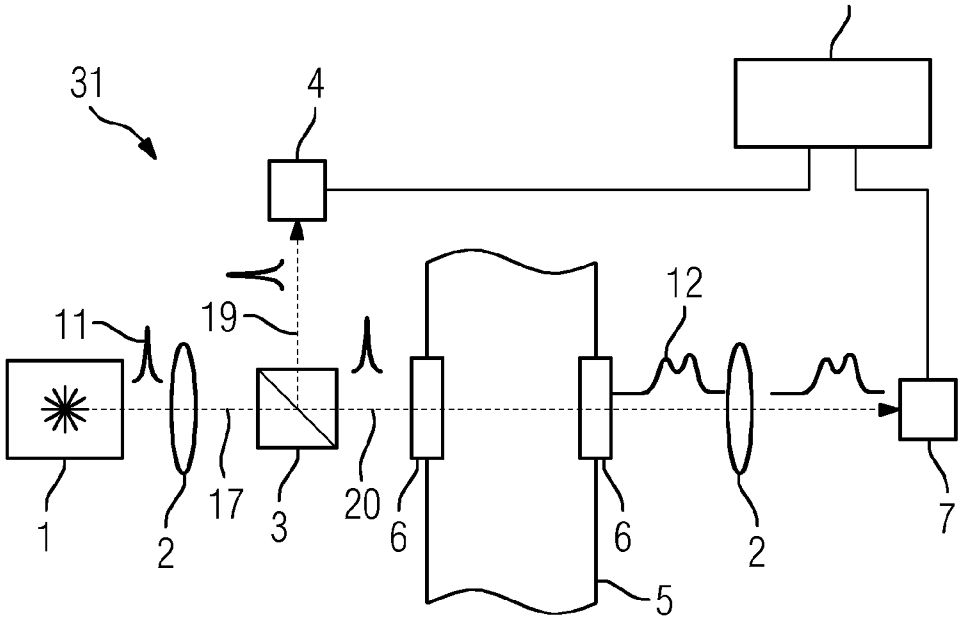


FIG 4

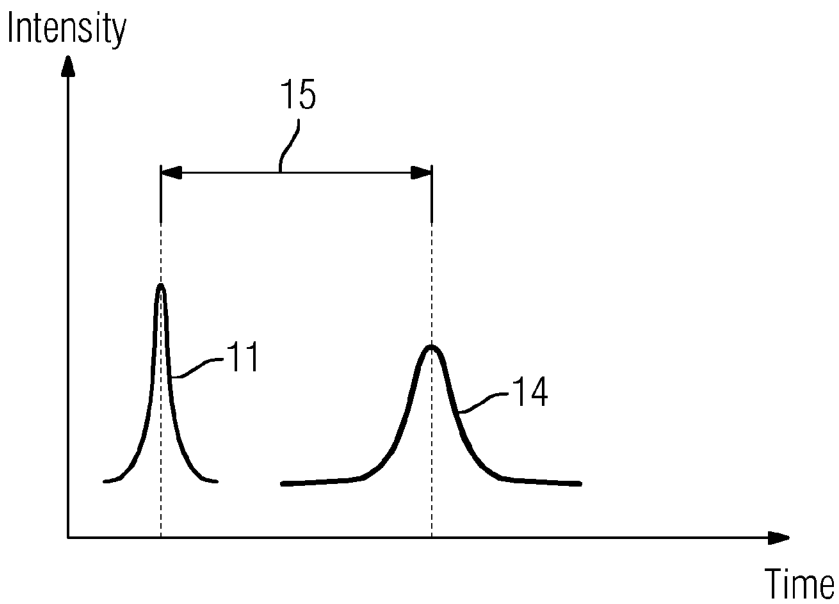

FIG 5

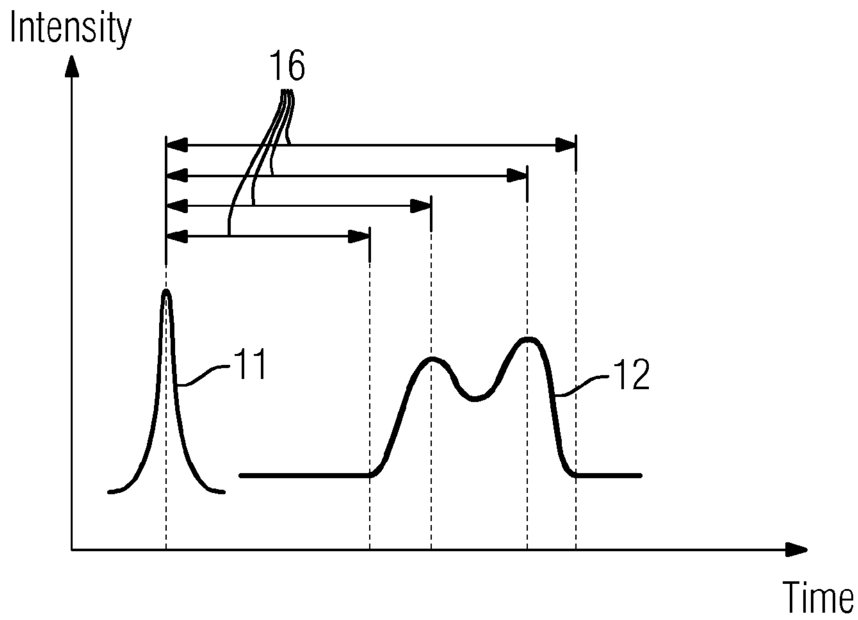


FIG 6

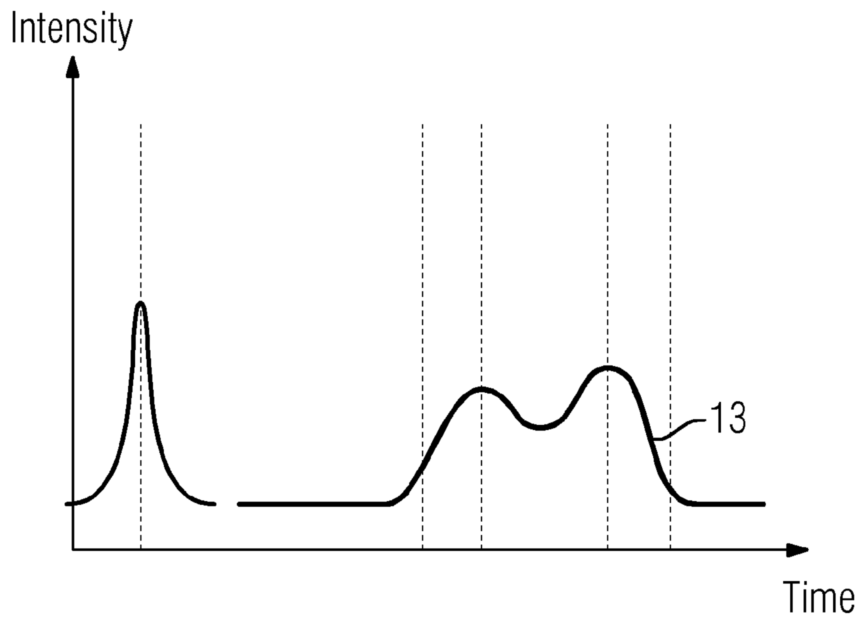

FIG 7

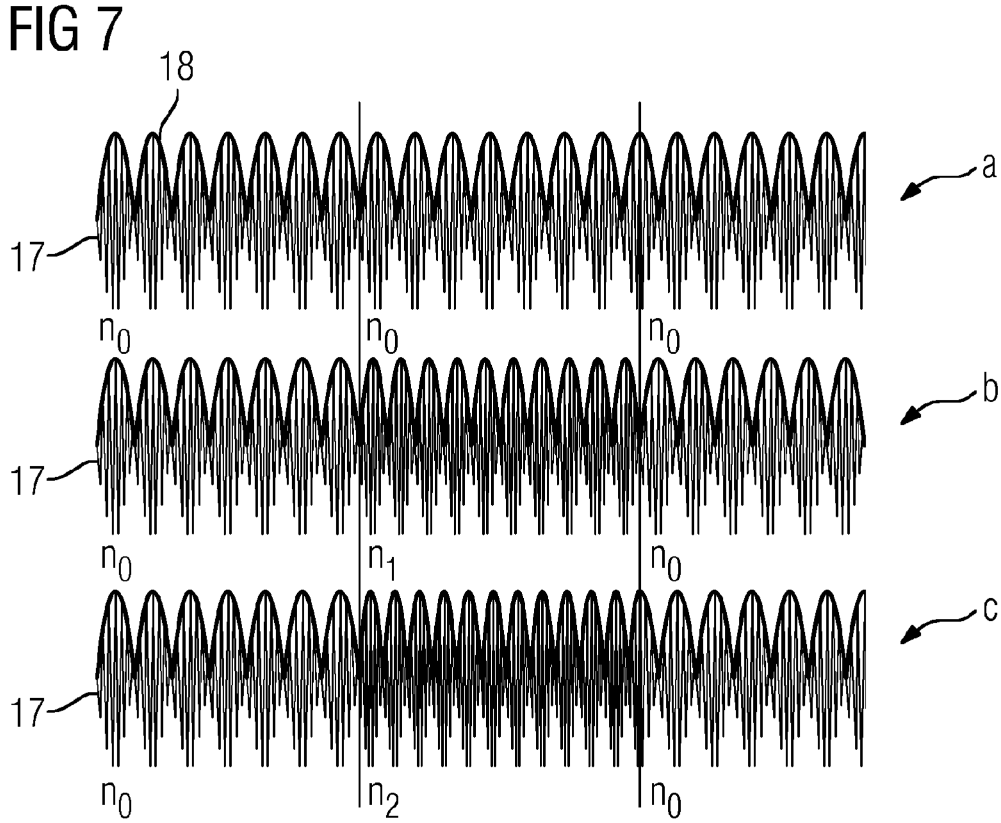


FIG 8

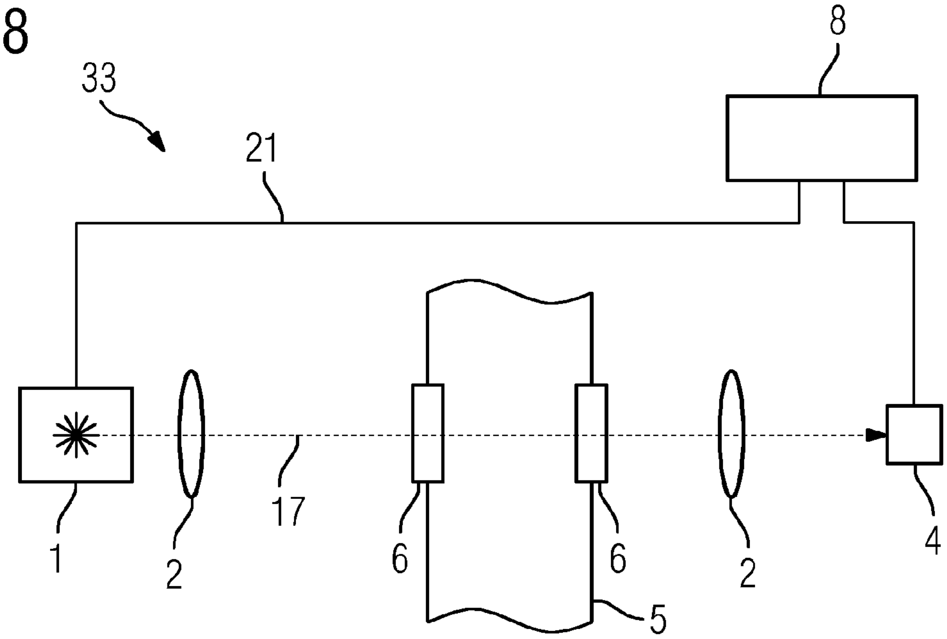

Europäisches Patentamt
European Patent Office
Office européen des brevets

# EUROPEAN SEARCH REPORT

Application Number
EP 12 19 1355

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 1 707 982 A1 (AGELLIS GROUP AB [SE]) 4 October 2006 (2006-10-04) * paragraphs [0026], [0019], [0023]; figure 2 * | 1,4-6, 9-15 | INV. G01N21/41 G01N21/45 |
| Y | JP 10 253532 A (NIPPON SOKEN; TOYOTA MOTOR CORP) 25 September 1998 (1998-09-25) * abstract; figure 1 * | 1,4-6, 9-15 | |
| X | CN 201 803 949 U (UNIV SHANDONG) 20 April 2011 (2011-04-20) * abstract; figure 1 * | 1,14 | |
| A | WO 01/36951 A2 (RHINO ANALYTICS LLC [US]) 25 May 2001 (2001-05-25) * page 15, line 11 - line 20 * * page 16, line 7 - line 14 * | 2,3 | |
| A | US 2003/151738 A1 (CHEN YAOSHENG [US]) 14 August 2003 (2003-08-14) * paragraph [0012] * | 2,3 | TECHNICAL FIELDS SEARCHED (IPC) |
| A | US 2004/229376 A1 (BEAUDUCEL CLAUDE [FR] ET AL) 18 November 2004 (2004-11-18) * claims 1,2; figure 1 * | 6-8 | G01N |
| A,D | US 2007/069131 A1 (BANERJEE AYAN [IN] ET AL) 29 March 2007 (2007-03-29) * the whole document * | 1,14 | |
| A,D | US 2004/056197 A1 (DAVIDSON JAMES R [US] ET AL) 25 March 2004 (2004-03-25) * the whole document * | 1,14 | |

The present search report has been drawn up for all claims

| Place of search | Date of completion of the search | Examiner |
|---|---|---|
| The Hague | 10 April 2013 | Verdoodt, Erik |

1

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 12 19 1355

This annex lists the patent family members relating to the patent documents cited in the above-mentioned European search report.
The members are as contained in the European Patent Office EDP file on
The European Patent Office is in no way liable for these particulars which are merely given for the purpose of information.

10-04-2013

| Patent document cited in search report | Publication date | Patent family member(s) | Publication date |
|---|---|---|---|
| EP 1707982 A1 | 04-10-2006 | DE 112006000738 T5 | 06-03-2008 |
| | | EP 1707982 A1 | 04-10-2006 |
| | | US 2009128395 A1 | 21-05-2009 |
| | | WO 2006103201 A1 | 05-10-2006 |
| JP 10253532 A | 25-09-1998 | | |
| CN 201803949 U | 20-04-2011 | NONE | |
| WO 0136951 A2 | 25-05-2001 | AR 029017 A1 | 04-06-2003 |
| | | AT 362104 T | 15-06-2007 |
| | | AU 776712 B2 | 16-09-2004 |
| | | AU 1781001 A | 30-05-2001 |
| | | CA 2391981 A1 | 25-05-2001 |
| | | DE 60034811 T2 | 24-01-2008 |
| | | EP 1242812 A2 | 25-09-2002 |
| | | JP 2003515130 A | 22-04-2003 |
| | | US 6614238 B1 | 02-09-2003 |
| | | WO 0136951 A2 | 25-05-2001 |
| US 2003151738 A1 | 14-08-2003 | NONE | |
| US 2004229376 A1 | 18-11-2004 | GB 2401436 A | 10-11-2004 |
| | | US 2004229376 A1 | 18-11-2004 |
| US 2007069131 A1 | 29-03-2007 | NONE | |
| US 2004056197 A1 | 25-03-2004 | AU 2003298568 A1 | 04-05-2004 |
| | | US 2004056197 A1 | 25-03-2004 |
| | | WO 2004036149 A2 | 29-04-2004 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4862001 A
- US 7345280 A
- US 7381954 A
- US 7034302 A


### Non-patent literature cited in the description


- **CH. MITRA et al.** Development of Steam Quality Measurement and Monitoring Technique Using Absorption Spectroscopy with Diode Lasers. *IEEE Sensors Journal,* 2011, vol. 11 (5), 1214-1219
- **P. SCHIEBENER et al.** Refractive Index of Water and Steam as Function of Wavelength, Temperature and Density. *J. Phys. Chem. Ref. Data,* 1990, vol. 19 (3), 677-717